# EUROPÄISCHE PATENTSCHRIFT

(11) **EP 0 486 421 B1**
(45) Veröffentlichungstag und Bekanntmachung des Hinweises auf die Patenterteilung: **12.06.1996**
(21) Anmeldenummer: 91810739.2
(22) Anmeldetag: 18.09.1991
(51) Int. Cl.: B29B 13/00, B28B 7/34

(54) **Verfahren zur Herstellung eines metallischen Werkstoffes und Werkstoff, der nach dem Verfahren hergestellt ist**
Method of manufacturing a metallic material and material obtained by this method
Procédé pour fabriquer un materiau métallique et matériau obtenu par ce procédé

(30) Priorität: 15.11.1990 CH 3635/90
(43) Veröffentlichungstag der Anmeldung: 20.05.1992
(73) Patentinhaber: UNIPOR AG, CH-8401 Winterthur (CH)
(72) Erfinder: Hirzel, Theodor, CH-8967 Widen (CH)
(74) Vertreter: Frei, Alexandra Sarah

(56) Entgegenhaltungen:
- EP-A- 0 090 073
- EP-A- 0 329 511
- FR-A- 2 206 426
- GB-A- 1 113 629
- US-A- 3 755 213
- US-A- 5 000 780

## Beschreibung

Die Erfindung liegt auf dem Gebiet der pulvermetallurgischen Werkstoffe und betrifft ein Verfahren gemäss dem Oberbegriff des ersten Patentanspruchs sowie einen offenporigen, metallischen Werkstoff gemäss Patentanspruch 7, der nach dem Verfahren hergestellt ist.

Bekannte poröse, also offenporige, metallische Werkstoffe sind die Sintermaterialien. Sie werden gemäss pulvermetallurgischen Richtlinien und Methoden hergestellt und zeichnen sich vor allen Dingen durch eine beliebig einstellbare Porosität aus. Fur Bauteile von hoher Festigkeit reicht der Anteil des Porenraumes bspw. bis 5% und bei Filtern bspw. bis 60% des Gesamtvolumens. Die Herstellung besteht im wesentlichen in drei Abschnitten, nämlich der Pulverherstellung, der Formgebung und dem Sintern, evtl. mit Nachbehandlung. Jeder Herstellungsschritt hat seine eigene Problematik, der enstehende Werkteil ist in der Regel ein Halbzeug oder Fertigteil. Das Ausgangsmaterial ist Metallpulver, das durch die Fertigung in einen kompakten Körper überführt wird.

Diese Art von Materialien müssen metalltechnisch bearbeitet werden, sie eignen sich weniger als Ausgangsmaterial, aus dem Fertigteile, bspw. Formen und auch anderes gebaut werden können. Vorteilhaft wäre ein Werkstoff mit Eigenschaften wie Sinterkörper, also metallisch und porös, der aber wie bspw. Holz verarbeitbar ist, bzw. so bearbeitet werden kann, bspw. sägen, schleifen, ohne dass er heiss wird, wie das bei Metall der Fall ist, sich trotzdem polieren lässt, als wäre es Metall. Also die Vorteile der pulvermetallurgischen und der holzbearbeitenden Verfahren und Produkte auf sich vereinen, aber ohne deren Nachteile aufzuweisen. Ein solcher Werkstoff wird durch die nachfolgend diskutierte Erfindung ermöglicht.

Die ursprüngliche Idee basiert darauf, dass Metallpulverteile statt miteinander verschweisst miteinander verklebt werden. Eine solche Methode zeigt die WO 88/07 921 desselben Erfinders, in der Formkörper zum Tiefziehen von Folien und Vergiessen von Werkstoffen gezeigt werden. Die Herstellung dieser Formkörper geschieht aus verdüstem Metallpulver, das mit einem Bindemittel vermischt wird, sodass idealerweise jedes Granulatkorn mit einem dünnen Bindemittelfilm überzogen ist. Die wesentlichen Details sind in dieser Druckschrift eingehend diskutiert. Dieses Verfahren, einen Formkörper aus einem porösen Werkstoff solcher Art herzustellen, wird hier, auf den Werkstoff bezogen, erfindungsgemäss weiter geführt.

Das verdüste Metallpulver soll Partikel mit einer möglichst unregelmässigen Form aufweisen. Kugelförmige Körner eignen sich weniger, obschon sie demselben Verfahren unterzogen werden können und auch brauchbare Resultate erzeugen. Statt nun die einzelnen Körner mit einem Bindemittel zu überziehen, um sie dann mittels Verklebung zu einem kompakten Körper zu formen, wird aus dem Granulat ein Vorprodukt hergestellt, das gezielt hergestellte Granulat-Cluster aufweist. Die Clusterbildung geschieht durch einen Knet- und Reibprozess, wie ihn bspw. Bäcker mit dem Teig durchführen.

Das Ziehen und Falten der feuchten Masse bewirkt eine starke Vermischung von Granulat und Verbindungsmittel; dieser Mischprozess wird jedoch so gesteuert, dass ein Granulatprodukt entsteht, welches bspw. 3 - 5 Ausgangspartikel, hier Metallpartikel, enthält.

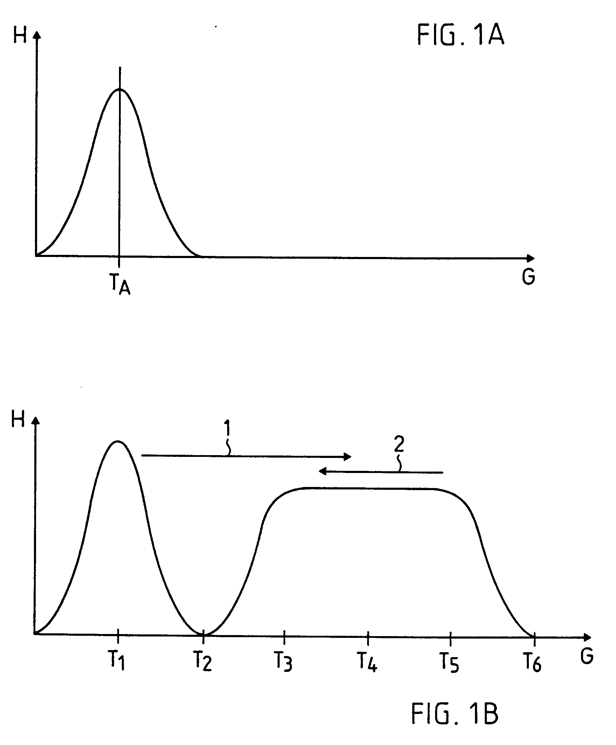

Die **Figuren 1A und 1B** zeigen das Ausgangsprodukt (Figur 1A) und die Herstellung des Granulatproduktes anhand von Verteilungskurven, in denen die Häufigkeit H auf der Abszisse, die Teilchengrösse G auf der Ordinate aufgetragen ist.

Eine bestimmte Siebfraktion T_{A} von Metallpartikeln dient als Ausgangsmaterial (Verteilungskurve 1A). Figur 1B zeigt einerseits dasselbe oder ein ähnliches Ausgangsprodukt, das aus den monomeren Partikeln der Grösse T₁ besteht. Diese Partikel werden durch den speziellen Mischprozess, durch Ziehen und Falten zu Cluster von mehreren, bspw. 2, 3, 4, 5 und 6 (Clustergrössen T₁ bis T₆) Metallpartikeln vereint (Pfeil 1), wobei sich die Clustergrösse durch Verlängerung des Misch- rsp. Knetprozesses verkleinert (Pfeil 2). Die Figur 1B zeigt andererseits eine beispielhafte Grössenverteilung der entstehenden Cluster, die beispielsweise hauptsächlich aus 3, 4 oder 5 monomeren Partikeln bestehen und die ein bestimmtes Vorprodukt bilden.

Das Vorprodukt, also ein Clustergranulat, wird folgendermassen hergestellt: zerdüstes Metallpulver, mit Vorzug nach einem Zerdüsungs-Verfahren hergestellt, bei dem Partikel mit unregelmässigen Formen entstehen, und unter den Metallen wiederum bevorzugt Aluminium, wird in eine Mischmaschine gegeben. Die Mischmaschine muss zum Kneten geeignet sein und zwar so, dass ein ständiges Ziehen und Falten des darin befindlichen Materials stattfindet. Dies ist beispielsweise eine Einrichtung mit Knetarmen und mit einem sich relativ zur Behälterinnenwand bewegenden Rakel, mit dem die teigige Masse zwischen Behälterwand und Rakel durchgezwängt wird. An dieser Stelle, eine Art Engpass, wird die Masse zusammengedrückt und gezogen und mit den Knetarmen wird die Masse anschliessen gefaltet, ein Prozess, der sich solange wiederholt, bis der gewünschte Materialzustand, hier die angestrebte Clustergrösse, erreicht ist. Eine der Ausgangsmenge des Metalls entsprechende Menge (bspw. 70g Al zu 30g Harz) fliessfähiges Harz wird portionenweise unter ständigem Mischen dazugegeben und das Gemisch solange bearbeitet, bis nach etwa 20 Minuten aus der teigigen Masse ein klumpiges Granulat entsteht. Auf diese Weise erhält man ein Cluster von etwa 4 bis 8 Monopartikeln. Bricht man vorher ab, ist das Cluster grösser, mischt und knetet man weiter, wird das Cluster kleiner. Ein kleineres Cluster ergibt ebenfalls ein klumpiges Granulat, beim Sintern lässt es sich jedoch stärker verdichten und die Porigkeit nimmt ab.

Das so hergestellte Clustergranulat ist die Vorstufe zur Herstellung des fertigen Werkstoffes, der herstellungtechnisch ebenfalls kein eigentliches Endprodukt, sondern ein Zwischenprodukt ist. Zwischenprodukt deswegen, weil es, nach der Formgebung, vorzugsweise gut verarbeitungsfähige Platten, wie ein Stück Holz oder ein Stück Metall zu einem Endprodukt verarbeitet werden kann. Damit wird dieses Material zu einem Werkstoff für Endprodukte.

Um einem solchen Werkstoff seine Rohform zu geben, muss das Clustergranulat einem Sinterprozess unterzogen werden. Dies geschieht durch Zugabe eines Härtemittels, bspw. durch Mischen, und anschliessend durch Pressen, Rütteln, Vibrieren, unter Druck und Wärmezufuhr und Erkalten des Formstückes. Die einzelnen Cluster werden in diesem Prozess miteinander verbunden, zu einem völlig unregelmässig strukturierten Material, das in der gewünschten Packungsdichte ebenso unregelmässige Hohlräume aufweist, wie die Clusters unregelmässig aneinander gebracht, gesintert und gehärtet sind. Das Material weist an seiner Oberfläche eine Vielzahl von unregelmässig geformten Oeffnungen oder Poren auf, welche Oeffnungen den Umgrenzungen der Cluster entsprechen, die, ähnlich einem schlecht passenden Mosaik unregelmässig geformte Fugen aufweisen. Im Querschnitt verlängern sich diese Fugen bzw. Oeffnungen zu höhlenartigen Gängen, die sich in zufälliger Form und Richtung im Material fortpflanzen und auch Querverbindungen derselben Art aufweisen. Auf diese Weise ist ein festes, auf seine eigene Art schaumiges Material in lockerer Verbindung geschaffen worden, dessen "Lockerheit" durch den Herstellungsprozess gesteuert werden kann.

Eine weitere, wichtige Eigenschaft dieses Materials ist die spezielle Beschaffenheit durch n-Clusters, die an der Oberfläche zerkleinert werden können. Die Oberfläche kann auf verschiedene Weise bearbeitet werden und weist dementsprechend verschiedene Charakteristika auf. Wird das Material zum Beispiel gesägt, so bleibt die Grundporosität mehr erhalten, als wenn das Material nachträglich noch geschliffen oder gar poliert wird. Mit dem Schleifprozess schliessen sich die Oeffnungen der Gänge mehr und mehr. Je feiner die Oberfläche desto feiner auch die Verbindung zwischen den einzelnen Clustern, sie scheinen durch die Bearbeitung immer besser zusammen zu passen, was an und für sich erstaunlich ist. Wird das Material an seiner Oberfläche schliesslich poliert, dann überzieht ein Netz von Fugen zwischen unregelmässigen Begrenzungen die ganze Oberfläche, welche Fugen so fein sind, dass man sie fast nicht mehr als Öffnung erkennen kann. Nur noch an einzelnen wenigen Stellen, an welchen durch die Bearbeitung ganze Cluster aus der Oberfläche gerissen worden sind, sieht man (unter dem Mikroskop betrachtet) in der Tiefe die relativ grobe, skelettartige Strukturierung.

Diese Oberflächenverfeinerung entsteht nicht durch eine Verdichtung des Materials, sondern durch eine Art Auffüllung von Oeffnungen durch abgetragenes Material, also durch den Arbeitsprozess, in welchem der Strukturcluster, oder der die Grobstruktur bewirkende Cluster, gleichsam zerlegt wird in seine Untereinheiten, das ursprüngliche Metallgranulat nämlich. Dieses Fein-Granulat, das sich erst bei der Bearbeitung bildet, bildet das Fugenfüllmaterial, mit dem die Oberfläche verfeinert wird, und zwar bis auf Korngrössen des Granulats. Im Untergrund bleibt die skelettartige Grobstruktur als tragende Struktur erhalten. Diese tragende, grobe Struktur ist mechanisch ausreichend fest, um als Werkstoff zu dienen und die herausgearbeitete Oberfläche bildet eine Schicht, welche das Charakteristikum aufweist, das man haben möchte.

Kurz gesagt, geschieht folgendes: ein feinkörniges Ausgangsmaterial soll in eine gewünscht grobe Struktur gebracht werden, welche als tragendes, raumfüllendes Skelett ein minimal mögliches spezifisches Gewicht und sui generis aber auch eine grobe Struktur aufweist (denn nur durch die Vergröberung kann dieses Raumverhältnis Luft/Festkörper herbeigeführt werden), welche dann an der Oberfläche auf die gewünschte Feinheit gebracht werden kann, in dem der Ausgangscluster, das gleichsam das Material für eine Feinstruktur liefert, zerlegt und eingelagert wird.

Das Material ist ausserdem nicht wärmeleitend, die Metallpartikel berühren sich gegenseitig für eine Wärmebrückenbildung in einem zu geringen Ausmass, sodass die durch die Oberflächen-Bearbeitung entstehende Wärme sozusagen vor Ort verwendet wird und zwar, um die Monopartikel im Harzgefüge einzubetten und einzubacken. Die Oberflächenstruktur ist stets unregelmässig, weil die Monopartikel unregelmässige Formen aufweisen, aber entsprechend dem n-Cluster bis zu n-fach feiner sein kann.

Wird das grobgefügige Material mit Trennmitteln bearbeitet, die nicht in der Lage sind, den Cluster zu zerlegen, beispielsweise eine Säge, dann bleibt auf der Oberfläche (so wie innen) das Grobgefüge erhalten. Werden Trennmittel verwendet, die den Cluster zerlegen können, beispielsweise eine Schleifscheibe, dann entsteht eine feiner und feinere Struktur, die schliesslich so fein werden kann, wie die Monopartikel es zulassen. Dies erreicht man durch Polieren.

Würde man keine Cluster herstellen, sondern direkt vom Ursprungsgranulat ausgehen, dann wäre der Werkstoff nach dem Sinterprozess wesentlich dichter und schwerer, nämlich genau so, wie es bei einem üblichen Sinterprozess entstehen würde. Je grösser aber ein Ausgangscluster ist, desto schaumiger und leichter wird das Material, das man erhält. Dies hat natürlich auch seine Grenzen. Irgendwann wird das Strukturskelett zu locker, um noch Halt zu geben. Da sich das Skelett unregelmässig nach allen Raumrichtungen ausdehnt, ist auch bei jeder Belastung in etwa der gleiche Widerstand vorhanden, das heisst, das Skelett ist optimal isotrop. Dies ist einer der Gründe für die gute Druckfestigkeit bei geringem spezifischen Gewicht. Wünscht man dann eine feinere, gleichmässigere Oberfläche, beispielsweise, weil man eine bestimmte Filterwirkung erzielen will, so zerlegt man die Oberflächencluster mit dem geeigneten Werkzeug und lagert die Bruchstücke in die Oeffnungen ein. Das Verbacken geschieht lokal durch die Wärme, die im Arbeitsprozess entsteht. Zuviel Arbeitswärme kann der Wertistoff jedoch nicht aufnehmen, sodass der grösste Teil dieser Wärme durch das Werkzeug selber wegtransportiert werden muss und auch wird.

Ein solcher Werkstoff ist leicht, gasdurchlässig, dank nichtleitenden Eigenschaften bearbeitbar ohne Kühlung, also trocken, dank Clusterstruktur verfeinerbar und trotzdem locker bezüglich Feststoff. Die Lockerheit kann, wie schon gesagt, durch die Grösse der Cluster gesteuert werden. Damit bestimmt man auch die Verfeinerungsbandbreite. Ein Zehn-Cluster ergibt eine Verfeinerungsbandbreite von 1:10, von relativ gut sichtbar grober Oberfläche bis zu einer metallisch glänzenden polierten Oberfläche. Damit wird die Gasdurchlässigkeit gesteuert, ohne dass das spezifische Gewicht beeinträchtigt wird, wie das bei den üblichen Sinterkörpern immer der Fall ist.

Diese Steuerung der Gasdurchlässigkeit bei stets gleicher spezifischer Raumdichte ist einer der grossen Vorteile gegenüber Sintermaterialien üblicher Herstellung.

Stellt man sich also die Aufgabe, einen gasdurchlässigen Werkstoff von geringem spezifischen Gewicht dessen Gasdurchlässigkeit gesteuert werden soll, ohne das spezifische Gewicht zu beeinflussen, beispielsweise eine "Porigkeit" in einer Bandbreite von 1:7 bei gleichem spezifischen Volumen herzustellen, so löst man dies folgendermassen:
Es wird ein Grundmaterial (Monopartikel) gewählt, das der feinsten Porigkeit entspricht. Dieses Grundmaterial wird durch einen Arbeitsprozess in Cluster von mehreren Partikeln des Grundmaterials zusammengebracht. Die Clustergrösse bestimmt das Raumgewicht des Werkstoffes. Die Cluster werden in einem Sinterprozess zu einem Werkstoff zusammengebacken, derart, dass das angezielte Raumgewicht im wesentlichen entsteht (rütteln, vibrieren, pressen, oder alles miteinander). Das fertige Material wird an seinen Oberflächen behandelt, in dem die Oberflächencluster durch einen ausgewählten Arbeitsprozess (sägen, schleifen, polieren) zerlegt werden und die Bruchstücke in die Oeffnungen in der Oberfläche eingelagert werden. Auf diese Weise wird die Porigkeit verfeinert. Die Einlagerung geschieht durch Druck, der sich bei der Bearbeitung bildet und durch die anfallende Arbeitswärme, die den Cluster-Bruchteil in die Harzmatrix einbäckt. Da das Material kein Wärmeleiter ist, wird die Überschusswärme durch das Bearbeitungswerkzeug abgeführt. Das Abtragen an der Oberfläche und die Zerlegung des Clusters geschieht sukzessive. Beim Polieren schliesslich werden nur noch Monopartikel in Oberflächenöffnungen eingelagert und die Porigkeit ist an der Grenze ihrer Feinheit angelangt.

Das Herstellen der Cluster ist ein Arbeitsschritt und führt zu einem lagerbaren Vorprodukt. Das Herstellen eines Ausgangs-Werkstoffes unter Verwendung des Cluster-Vorproduktes ist ein Arbeitsschritt, der ebenfalls zu einem lagerbaren Halbzeug führt. Die Herstellung des Fertigproduktes aus dem Werkstoff und das Einbringen der gewünschten Porigkeit ist ein letzter Arbeitsschritt, welcher beim Benützer des Werkstoffes ausgeführt wird. Doch der Werkstoff gibt ihm die Möglichkeit, diesen letzten Arbeitsschritt mit dem entsprechenden Erfolg durchzuführen.

Ausgegangen wird von einem feinen Granulat, bspw. ein Metallgranulat, welches durch ein Verbindungsmittel zu einem Cluster von bspw. 4 bis 10 Granulatpartikel, das sind Monopartikel, zusammengebracht wird. Die Clusterbildung, die gesteuert werden kann, geschieht vorteilhafterweise durch einen Knet- und Reibprozess. Der Harzanteil, der den Cluster zusammenhält, weist wenig Härter auf, da ja noch keine mechanische Festigkeit verlangt wird. Das Clustermaterial wird beim Weiterverarbeiten mit einem Harzhärter vermischt und als feuchte Masse in einer Form gepresst und erwärmt. Im wesentlichen ist dies ein Sinterprozess, der zu einem Halbzeug, eben dem Werkstoff eines bestimmten Raumgewichtes führt. Dieser Werkstoff kann dann bspw. wie Holz weiter bearbeitet werden. Das Raumgewicht wird durch die nachfolgende Bearbeitung nicht mehr verändert, wohl aber, falls gewünscht, die Oberflächenstruktur bezüglich Porenfeinheit, wobei der Begriff "Pore" nur im weiteren Sinne zutrifft.

### Ein Beispiel:

7 kg zerstäubtes Aluminium mit Partikelgrössen zwischen 50 und 100µm (Siebfraktion) wird als Ausgangsmaterial mit 3 kg Epoxid-Harz (Ciba-Geigy) als Bindematerial oder Matrix, zu einem Cluster von ungefähr 4 bis 8 Aluminiumpartikeln verarbeitet. Die Mischzeit, Kneten und Falten bei Raumtemperatur beträgt 20 Minuten. Das entstehende klumpige Feuchtgranulat ist lagerfähig und kann zur Weiterverarbeitung zum Werkstoff getrennt vom später in den Einsatz zu bringenden Härter aufbewahrt werden. Um einen Werkstoff mit einem Raumgewicht von ca. 1,7 g/cm² zu erhalten, werden die hergestellten 10 kg Feuchtgranulat mit 1 kg Härter (entsprechend dem verwendeten Harz) gemischt und diese Mischung (das Clustergranulat) unter einem Pressdruck von 120 kg/cm² gepresst oder vibriert und bei einer Temperatur von 100°C nachgetempert. Der ausgehärtete Werkstoff ist unbearbeitet metallfarben und von matter Oberfläche. Nach einer Bearbeitung durch Schleifen wird ein deutlicher Metallglanz sichtbar und nach einer weiteren Bearbeitung durch Polieren spiegelt die Oberfläche wie Metall und die Struktur ist im wesentlichen monopartikelig fein geworden. Das Raumgewicht ist natürlich immer noch dasselbe geblieben. Presst man Luft in dieses Material, so erscheinen an seiner Oberfläche kleine Bläschen von austretender Luft, die bei einer polierten Oberfläche ganz fein werden. Die Festigkeit des Materials ist, wie das Raumgewicht, immer noch dieselbe.

Ein Werkstoff auf der Basis von Aluminium und aus diesem Vorprodukt mit einer Clustergrösse T₄₋₈ hergestellt, hat ungefähr folgende technische Daten.

| | |
|---|---|
| - Dichte | 1,5 bis 1,7 g/cm² |
| - Shore-Härte D (gemäss DIN 53505) | 76,3 bis 76,5 |
| - Abrasion (gemäss ASTM D 1044-78) | 195 bis 220 mg |
| - Luftdurchlässigkeit bei 1 bar/cm² | 0,210 bis 0,0289 l/min |
| - Porengrösse (vibriertes Material) | 12 bis 25 µm |
| Porengrösse (gepresstes Material) | 6 bis 12 µm |
| - Kapillarvolumen | 16 bis 21 % |
| - Wärmeformbeständigkeit (bei Dauertemperaturbelastung) | 95 bis 100°C |
| - Zugfestigkeit (gemäss DIN 53455) | 12 bis 21 Mpa |
| - Biegezugfestigkeit (gemäss DIN 53452) | 20 bis 38 Mpa |
| - Schlagzähigkeit (DIN 53433) | 17,3 bis 24,5 mJ/mm² |
| - Druckfestigkeit | 8 - 10 Mpa |

Ein Verbundwerkstoff dieser Art kann wie Holz und/oder wie Metall bearbeitet werden. Die Porengrösse von 6µ bis 12µ bzw. von 12µ bis 25µ (je nach Herstellungsverfahren) ist gleichmässig über das ganze Materialvolumen verteilt und die Poren sind untereinander zusammenhängend. Die Dichte ist, bei einem Harzanteil von lediglich 30% mit 1,7 g/cm³ ausserordentlich niedrig (Aluminium hat eine Dichte von 2,7 g/cm³). Das Material lässt sich sägen, schneiden, polieren, kleben etc. und kann für mannigfaltige Zwecke eingesetzt werden. Es kann ohne weiteres in Form von Platten verschiedener Dicke oder in balkenähnlichen Stücken zur Weiterverarbeitung angeboten werden.

Das Verfahren zum Herstellen eines harten, formfähigen Werkstoffes mit Kanälen zur Durchleitung von Fluiden, welche Kanäle an ihren Austrittsstellen an der Oberfläche verkleinerbar sind und welcher Werkstoff ein gewünschtes Raumgewicht aufweist, ist dadurch herstellbar, dass aus Partikeln mit Hilfe eines Bindemittels ein Cluster von mehreren Partikeln gebildet wird und dieser Cluster in einem weiteren Arbeitsschritt mit Hilfe eines Bindemittels zu einem zusammenhängenden Formgefüge zusammengetan werden, in welchem die Struktur eine Vielzahl untereinander zusammenhängender Hohlräume aufweist. Die Verringerung der Porigkeit der Oberfläche geschieht durch die Zerlegung von Oberflächenclustern in Teilstücke und Einbettung dieser Teilstücke in die Oberflächenöffnungen.

Der daraus resultierende Werkstoff zeichnet sich dadurch aus, dass er eine Grobstruktur aufweist, welche aus Partikel-Clustern besteht, die durch ein Bindemittel zusammengehalten werden, wobei die Partikel-Cluster Anhäufungen von durch Bindemittel verbundenen Partikeln sind. Nach einer allfälligen Bearbeiten seiner Oberfläche zur Verfeinerung der Porigkeit weist das Material eine Oberfläche auf, welche durch Clusterbruchstücke in Bezug zur Werkstoffstruktur verfeinert und verdichtet ist.

Aus dem erfindungsgemässen Werkstoff können beispielsweise Formkörper, Modelle, Filter, Verteilkörper zur Verteilung von Gasen oder Flüssigkeiten, Mischkörper zur Mischung von Gasen und/oder Flüssigkeiten, Lagerkörper, Schutzverkleidungen gegen bspw. Brand oder Schall und vieles anderes mehr hergestellt werden.

## Patentansprüche

1. Verfahren zum Herstellen eines harten, formfähigen metallischen Werkstoffes mit Kanälen zur Durchleitung von Fluiden, welche Kanäle an ihren Austrittsstellen an der Oberfläche verkleinerbar sind und welcher Werkstoff ein gewünschtes Raumgewicht aufweist, dadurch gekennzeichnet, dass aus metallischen Partikeln mit Hilfe eines Bindemittels durch Kneten Cluster von mehreren Partikeln gebildet wird und diese Cluster in einem weiteren Arbeitsschritt mit Hilfe eines Bindemittels zu einem zusammenhängenden Formgefüge zusammengetan wird, in welchem die Struktur eine Vielzahl untereinander zusammenhängende Hohlräume aufweist.

2. Verfahren nach Anspruch 1, dadurch gekennzeichnet, dass die Grösse der Cluster durch die Dauer des Knetvorganges reguliert wird.

3. Verfahren nach einem der Ansprüche 1 bis 2, dadurch gekennzeichnet, dass der Werkstoff erzeugt wird durch Rütteln, Pressen oder Vibrieren der Cluster oder durch eine Kombination von Rütteln, Pressen und/oder Vibrieren.

4. Verfahren nach Anspruch 3, dadurch gekennzeichnet, dass die Porengrösse des Werkstoffes durch die Wahl des Prozesses zur Herstellung des Werkstoffes aus den Clustern und durch die Wahl der entsprechenden Prozessparameter eingestellt wird.

5. Verfahren zum Verkleinern der Oberflächenöffnungen des Werkstoffes gemäss Anspruch 1, gekennzeichnet durch die Zerlegung von Oberflächenclustern in Teilstücke und Einbettung dieser Teilstücke in die Oberflächenöffnungen.

6. Metallischer Werkstoff, hergestellt gemäss Verfahren nach einem der Ansprüche 1 bis 4, dadurch gekennzeichnet, dass er eine Grobstroktur aufweist, welche aus Partikel-Clustern besteht, die durch ein Bindemittel zusammengehalten werden, wobei die Partikel-Cluster Anhäufungen von durch Bindemittel verbundenen Partikeln sind.

7. Werkstoff nach Anspruch 6 und bearbeitet nach dem Verfahren gemäss Anspruch 6, dadurch gekennzeichnet, dass er eine Oberfläche aufweist, welche durch Clusterbruchstücke in Bezug zur Werkstoffstruktur verfeinert und verdichtet ist.

8. Werkstoff nach einem der Ansprüche 6 oder 7, dadurch gekennzeichnet, dass er aus Aluminiumpartikeln und einem Epoxid-Harz besteht.

9. Werkstoff nach Anspruch 8, dadurch gekennzeichnet, dass er eine Dichte von 1,5 bis 1,7 g/cm², Poren von 6 bis 25 µm und ein Kapillarvolumen von 16 bis 21% aufweist.

10. Werkstoff nach Anspruch 9, dadurch gekennzeichnet, dass er eine Zugfestigkeit von 12 bis 21 Mpa, eine Biegezugfestigkeit von 20 bis 38 Mpa, eine Schlagzähigkeit von 17,3 bis 24,5 mJ/mm² und eine Druckfestigkeit von 8 bis 10 Mpa aufweist.

11. Verwendung des Werkstoffes nach einem der Ansprüche 6 bis 10 als Formkörper.

12. Verwendung des Werkstoffes nach einem der Ansprüche 6 bis 10 zur Herstellung von Filtern, Verteil-, Misch- oder Lagerkörpern.

13. Verwendung des Werkstoffes nach einem der Ansprüche 6 bis 10 zur Herstellung von Schutzverkleidungen.

## Claims

1. Method for the manufacture of a hard, shapable, metallic material with channels for the passage of fluids and the size of said channels can be reduced at their exit points on the surface and the material has a desired volumetric weight, characterized in that from metallic particles clusters of several particles are formed with the aid of a binder by kneading and in a further working step said clusters are brought together with the aid of a binder so as to form a cohesive shape structure and in which the latter has a plurality of interconnected cavities.

2. Method according to claim 1, characterized in that the size of the clusters is regulated by the duration of the kneading process.

3. Method according to one of the claims 1 or 2, characterized in that the material is produced by shaking, pressing or vibrating the clusters or by a combination of shaking, pressing and/or vibrating.

4. Method according to claim 3, characterized in that the pore size of the material can be adjusted by the choice of the process for producing the materal from the clusters and by the choice of the corresponding process parameters.

5. Method for reducing the size of the surface openings of the material according to claim 1, characterized by breaking down the surface clusters into fragments and embedding these fragments in the surface openings.

6. Metallic material produced according to the method of one of the claims 1 to 4, characterized in that it has a coarse structure consisting of particle clusters held together by a binder, the particle clusters being accumulations of particles connected by binder.

7. Material according to claim 6 and worked according to the method of claim 5, characterized in that it has a surface refined and compressed by cluster fragments with respect to the material structure.

8. Material according to one of the claims 6 or 7, characterized in that it comprises aluminium particles and an epoxy resin.

9. Material according to claim 8, characterized in that it has a density of 1.5 to 1.7 g/cm², pores of 6 to 25 µm and a capillary volume of 16 to 21%.

10. Material according to claim 9, characterized in that it has a tensile strength of 12 to 21 Mpa, a bending strength of 20 to 38 Mpa, an impact strength of 17.3 to 24.5 mJ/mm² and a compressive strength of 8 to 10 Mpa.

11. Use of the material according to one of the claims 6 to 10 as a shaped body.

12. Use of the material according to one of the claims 6 to 10 for producing filters, distributing, mixing or storage bodies.

13. Use of the material according to one of the claims 6 to 10 for producing protective coverings.

## Revendications

1. Procédé pour fabriquer un matériau métallique dur, moulable, pourvu de canaux pour le passage de fluides, les sorties desdits canaux étant réductibles à la surface et le matériau présentant un poids spécifique souhaité, caractérisé en ce que, à partir de particules métalliques, on forme par malaxage avec un liant des agglomérés de plusieurs particules et, au cours d'une autre étape de travail, ces agglomérés sont mélangés avec un liant pour obtenir une texture moulée correspondante, dans laquelle la structure présente une multitude de cavités communiquant les unes avec les autres.

2. Procédé selon la revendication 1, caractérisé en ce que la taille des agglomérés est déterminée par la durée du processus de malaxage.

3. Procédé selon l'une quelconque des revendications 1 à 2, caractérisé en ce que le matériau est fabriqué par moulage sous secousses, par compactage ou par moulage sous vibrations des agglomérés ou par une combinaison du moulage sous secousses, du compactage et/ou du moulage par vibrations.

4. Procédé selon la revendication 3, caractérisé en ce que la taille des pores du matériau est déterminée par le choix du procédé de fabrication du matériau à partir des agglomérés et par le choix des paramètres correspondants du procédé.

5. Procédé pour réduire les orifices superficiels du matériau selon la revendication 1, caractérisé par le fractionnement des agglomérés superficiels en fragments et l'enrobage de ces fragments dans les orifices superficiels.

6. Matériau métallique fabriqué conformément au procédé selon l'une des revendications 1 à 4, caractérisé en ce qu'il présente une structure grossière qui est formée d'agglomérés de particules, qui sont maintenus ensemble par un liant, les agglomérés de particules étant des amas des particules liées par le liant.

7. Matériau selon la revendication 6 et élaboré par le procédé selon la revendication 5, caractérisé en ce qu'il présente une surface qui, par rapport à la structure du matériau, est affinée et compactée par les fragments d'agglomérés.

8. Matériau selon la revendication 6 ou 7, caractérisé en ce qu'il est composé de particules d'aluminium et d'une résine époxy.

9. Matériau selon la revendication 8, caractérisé en ce que sa densité est comprise entre 1,5 et 1,7 g/cm2, ses pores mesurent entre 6 et 25 µm et son volume capillaire est compris entre 16 et 21 %.

10. Matériau selon la revendication 9, caractérisé en ce que sa résistance à la traction est comprise entre 12 et 21 MPa, sa résistance aux efforts de traction et de flexion alternés est comprise entre 20 et 38 MPa, sa résilience est comprise entre 17,3 et 24,5 mJ/mm2 et sa résistance à la pression est comprise entre 8 et 10 MPa.

11. Utilisation du matériau selon l'une quelconque des revendications 6 à 10 en tant que pièce moulée.

12. Utilisation du matériau selon l'une quelconque des revendications 6 à 10 pour la fabrication de filtres, de collecteurs, de malaxeurs ou de coussinets.

13. Utilisation du matériau selon l'une quelconque des revendications 6 à 10 pour la fabrication de revêtements de protection.
